(19) **Europäisches Patentamt**
**European Patent Office**
**Office européen des brevets**

(11) **EP 3 155 446 B1**

(12) **FASCICULE DE BREVET EUROPEEN**

(45) Date de publication et mention
de la délivrance du brevet:
**07.07.2021 Bulletin 2021/27**

(51) Int Cl.:
*G01S 11/12* (2006.01)       *G08G 1/16* (2006.01)
*G01S 17/93* (2020.01)

(21) Numéro de dépôt: **15729410.9**

(22) Date de dépôt: **10.06.2015**

(86) Numéro de dépôt international:
**PCT/EP2015/062890**

(87) Numéro de publication internationale:
**WO 2015/189243 (17.12.2015 Gazette 2015/50)**

(54) **PROCÉDÉ ET SYSTÈME D'ESTIMATION D'UN PARAMÈTRE DANS UN VÉHICULE AUTOMOBILE ET VÉHICULE AUTOMOBILE ÉQUIPÉ D'UN TEL SYSTÈME**

VERFAHREN UND SYSTEM ZUR SCHÄTZUNG EINES PARAMETERS IN EINEM KRAFTFAHRZEUG UND KRAFTFAHRZEUG MIT SOLCH EINEM SYSTEM

METHOD AND SYSTEM FOR ESTIMATING A PARAMETER IN A MOTOR VEHICLE, AND MOTOR VEHICLE PROVIDED WITH SUCH A SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.06.2014 FR 1401332**

(43) Date de publication de la demande:
**19.04.2017 Bulletin 2017/16**

(73) Titulaire: **Valeo Schalter und Sensoren GmbH 74321 Bietigheim-Bissingen (DE)**

(72) Inventeurs:
• **VEJARANO, Camillo**
  **92800 Puteaux (FR)**

• **CHANUSSOT, Lowik**
  **75010 Paris (FR)**

(74) Mandataire: **Claassen, Maarten Pieter et al Valeo Schalter und Sensoren GmbH CDA-IP Laiernstraße 12 74321 Bietigheim-Bissingen (DE)**

(56) Documents cités:
**EP-A1- 1 806 595      EP-A2- 0 529 619
US-A- 6 005 609       US-A1- 2007 035 385**

• **None**

EP 3 155 446 B1

**Description**

DOMAINE TECHNIQUE AUQUEL SE RAPPORTE L'INVENTION

La présente invention concerne le suivi d'un objet et de son éloignement par traitement d'image.
Elle concerne plus particulièrement un procédé et un système d'estimation d'un paramètre dans un véhicule automobile, ainsi qu'un véhicule automobile équipé d'un tel système. Ce procédé et ce système visent la détermination d'un paramètre représentatif de l'éloignement d'un objet au moyen d'un capteur d'image équipant le véhicule automobile.
L'invention s'applique particulièrement avantageusement dans les systèmes d'avertissement anti-collision ou dans les systèmes de freinage, tels que les systèmes d'assistance au freinage ou les systèmes de freinage autonome d'urgence.

ARRIERE-PLAN TECHNOLOGIQUE

Il est connu d'évaluer un paramètre représentatif de l'éloignement d'un objet, tel que le temps avant collision ou la distance de l'objet, par analyse d'images de l'objet prises par un capteur d'image équipant un véhicule automobile, par exemple une caméra embarquée dans le véhicule automobile comme par exemple décrit dans la demande de brevet US 2007/0035285.
Un tel paramètre est par exemple utilisé dans un système d'avertissement anti-collision, comme décrit dans la demande de brevet WO2005/098782. Un système d'avertissement anti-collision émet des signaux visuels et/ou sonores destinés au conducteur du véhicule automobile lorsque le paramètre indique un rapprochement trop important de l'objet.
Un tel paramètre peut également être utilisé dans un système d'assistance au freinage : dans un tel système d'assistance au freinage, un freinage du véhicule automobile est automatiquement déclenché lorsque le paramètre indique un rapprochement trop important de l'objet (en général un autre véhicule situé devant le véhicule équipé du capteur d'image).
L'évaluation du paramètre étant basée sur les dimensions de l'objet et leur évolution dans des images successives, comme expliqué par exemple dans la demande de brevet WO2013/092795, elle n'est plus possible lorsque l'objet déborde le champ utile du capteur d'image, qui est par exemple nécessairement limité vers le bas du fait de la présence du capot du véhicule.
Or le rapprochement de l'objet peut dans certains cas ne pas avoir déclenché à cet instant le système d'avertissement ou de freinage, comme c'est le cas lorsque la vitesse relative entre l'objet et le véhicule est réduite (par exemple à environ 10 km/h) et que le système d'avertissement ou de freinage n'est donc déclenché qu'à quelques mètres de l'objet.
Il serait donc intéressant de pouvoir poursuivre l'évaluation du paramètre même lorsque l'objet est proche au point de déborder du champ utile du capteur d'image.

OBJET DE L'INVENTION

Dans ce contexte, la présente invention propose un procédé d'estimation d'un paramètre représentatif de l'éloignement d'un objet au moyen d'un capteur d'image équipant un véhicule automobile, comprenant les étapes suivantes :

- détermination d'une première valeur du paramètre sur la base d'une dimension de l'objet dans au moins une première image prise par le capteur d'image et dans laquelle l'objet est entièrement contenu ;
- s'il est déterminé à une étape que l'objet n'est pas entièrement contenu dans une image courante, détermination d'une dimension d'une partie seulement de l'objet dans l'image courante prise par le capteur d'image et dans laquelle l'objet est contenu seulement en partie (et non entièrement, comme dans la première image) ;
- détermination d'une seconde valeur du paramètre sur la base de la dimension de ladite partie.

Ainsi, même lorsque l'objet n'est entièrement contenu dans le champ du capteur d'image (comme c'est le cas dans l'image courante) il est possible d'estimer le paramètre grâce à la dimension de la partie de l'objet, par exemple en utilisant le fait que l'objet est solide et que ladite partie a des dimensions constantes relativement à celles de l'objet.
On peut prévoir les étapes suivantes pour définir notamment ladite partie de l'objet :

- détermination d'une première forme géométrique correspondant à l'objet dans la première image ;
- localisation, dans la première image, d'une seconde forme géométrique située à l'intérieur de la première forme géométrique ;

- détermination de ladite partie de l'objet dans l'image courante au moyen d'un algorithme de suivi visuel appliqué au contenu de la seconde forme géométrique dans la première image.

Ainsi, la partie de l'objet (ou "*mini-cible*"), utilisée lorsque l'objet n'est plus entièrement présent sur l'image, est définie dans la première image (où l'objet est entièrement présent). Les dimensions de la partie de l'objet (*"mini-cible"*) relativement à l'objet dans son ensemble sont ainsi bien définies. Par ailleurs, l'algorithme de suivi visuel permet d'identifier efficacement ladite partie de l'objet ("*mini-cible*") dans l'image courante.

On peut prévoir également que la première forme géométrique dans la première image soit déterminée au moyen d'un algorithme de suivi visuel appliqué à l'objet identifié (dans son ensemble) dans une image antérieure, par exemple au moyen d'un algorithme de reconnaissance de forme.

La seconde forme géométrique a par exemple une position et des dimensions prédéterminées relativement à la première forme géométrique, ce qui simplifie l'estimation de la dimension de l'objet sur la base de la dimension de ladite partie de l'objet dans l'image courante. On remarque que la dimension ainsi estimée de l'objet peut être utilisée en particulier dans la détermination de la seconde valeur du paramètre.

La première forme géométrique et/ou la seconde forme géométrique sont par exemple des rectangles.

En pratique, et notamment dans l'exemple de réalisation décrit plus loin, le paramètre est un temps avant collision de l'objet ou une distance entre le véhicule automobile et l'objet.

L'invention propose également un système d'estimation d'un paramètre représentatif de l'éloignement d'un objet au moyen d'un capteur d'image équipant un véhicule automobile, comprenant :

- des moyens de détermination d'une première valeur du paramètre sur la base d'une dimension de l'objet dans au moins une première image prise par le capteur d'image et dans laquelle l'objet est entièrement contenu ;
- des moyens pour déterminer si l'objet n'est as entièrement contenu dans une image courante; - des moyens de détermination d'une dimension d'une partie seulement de l'objet dans l'image courante prise par le capteur d'image et dans laquelle l'objet est contenu seulement en partie ;
- des moyens de détermination d'une seconde valeur du paramètre sur la base de la dimension de ladite partie.

L'invention propose aussi un véhicule automobile comprenant un système d'estimation tel que proposé ci-dessus et un système d'avertissement anti-collision conçu pour utiliser les première et seconde valeurs du paramètre.

Selon une autre possibilité, il est proposé un véhicule automobile comprenant un système d'estimation comme évoqué ci-dessus et un système de freinage (par exemple un système d'assistance au freinage ou un système de freinage autonome d'urgence) conçu pour utiliser les première et seconde valeurs du paramètre.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement un véhicule automobile équipé d'un système conforme aux enseignements de l'invention, le véhicule automobile suivant un autre véhicule automobile ;
- la figure 2 représente schématiquement les éléments principaux d'un système conforme aux enseignements de l'invention ;
- la figure 3 représente une séquence d'images analysées par le système de la figure 2 ; et
- la figure 4 représente les étapes principales d'un procédé mis en œuvre par le système de la figure 2 conformément aux enseignements de l'invention.

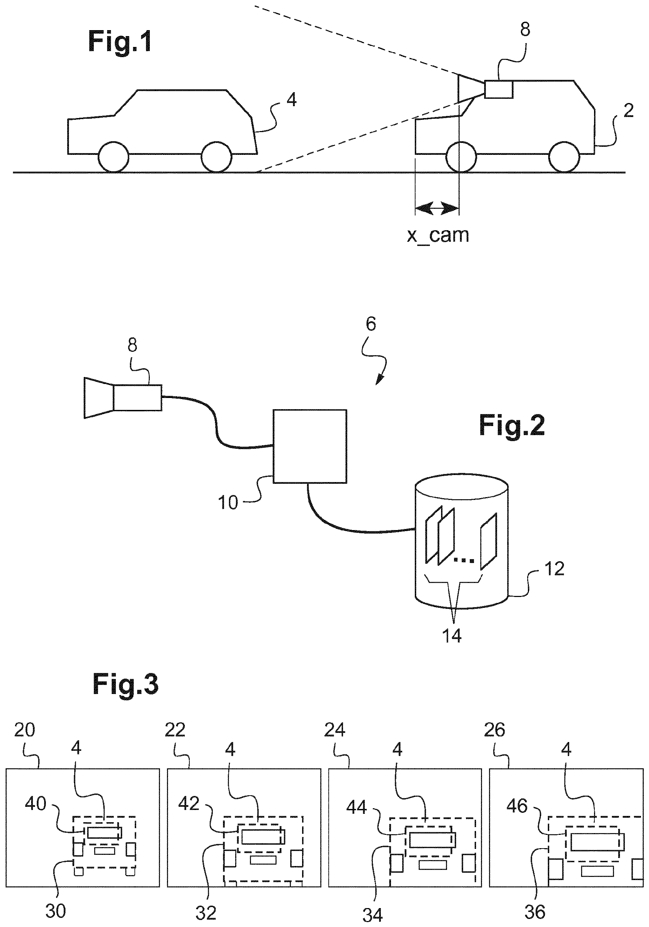

La figure 1 représente schématiquement un véhicule automobile 2 équipé d'un système 6 conforme aux enseignements de l'invention, qui comprend notamment un capteur d'image, ici une caméra vidéo 8.

Dans l'exemple de la figure 1, le véhicule automobile 2 suit un autre véhicule automobile 4. Comme expliqué ci-après, le système 6 est conçu pour déterminer au moins un paramètre représentatif de l'éloignement d'un objet (ici l'autre véhicule automobile 4) contenu dans les images prises par le capteur d'image 8 afin d'alimenter un système d'avertissement anti-collision ou un système de freinage tel qu'un système d'assistance au freinage ou un système de freinage autonome d'urgence.

La figure 2 représente schématiquement les éléments principaux d'un tel système 6.

Le système 6 comprend le capteur d'image 8, un processeur 10 et des moyens de mémorisation 12, réalisés par exemple sous forme d'un disque dur ou d'une mémoire vive.

Le capteur d'image (c'est-à-dire ici la caméra vidéo 8) prend une succession temporelle d'images du champ visible du capteur, qui forment une séquence 14 d'images mémorisées dans les moyens de mémorisation 12. On remarque que, dans l'exemple représenté en figure 2, les images sont reçues par le processeur 10 puis mémorisées par le processeur 10 dans les moyens de mémorisation 12. En variante, le capteur d'image 8 pourrait directement commander la mémorisation des images 14 dans les moyens de mémorisation 12.

Le processeur 10 analyse en temps réel les images prises par le capteur d'image 8 et mémorisées dans les moyens de mémorisation 12 afin de déterminer, selon le procédé décrit plus loin, le ou les paramètre(s) représentatif(s) de l'éloignement de l'objet visible sur les images, ici l'autre véhicule automobile 4. On remarque que, du fait du traitement en temps réel, on peut ne mémoriser dans les moyens de mémorisation 12 qu'un nombre limité des dernières images prises par le capteur d'image 8.

Le ou les paramètre(s) représentatif(s) de l'éloignement de l'objet peuvent alors être utilisés dans un système d'avertissement anti-collision et/ou dans un système d'assistance au freinage et/ou dans un système de freinage autonome d'urgence, chacun de ces systèmes pouvant utiliser, pour le traitement des données et la commande des actionneurs (alarme visuelle et/ou sonore, freins), le processeur 10 ou un autre processeur dédié (non représenté).

La figure 3 représente une séquence de quatre images 20, 22, 24, 26 analysées par le système qui vient d'être décrit dans un exemple de sa mise en œuvre.

Dans les deux premières images 20, 22, l'objet (ici l'autre véhicule automobile 4) est entièrement contenu dans l'image et la détermination de son éloignement est donc possible avec des méthodes connues, telle que celle décrite dans la demande de brevet WO2013/092795.

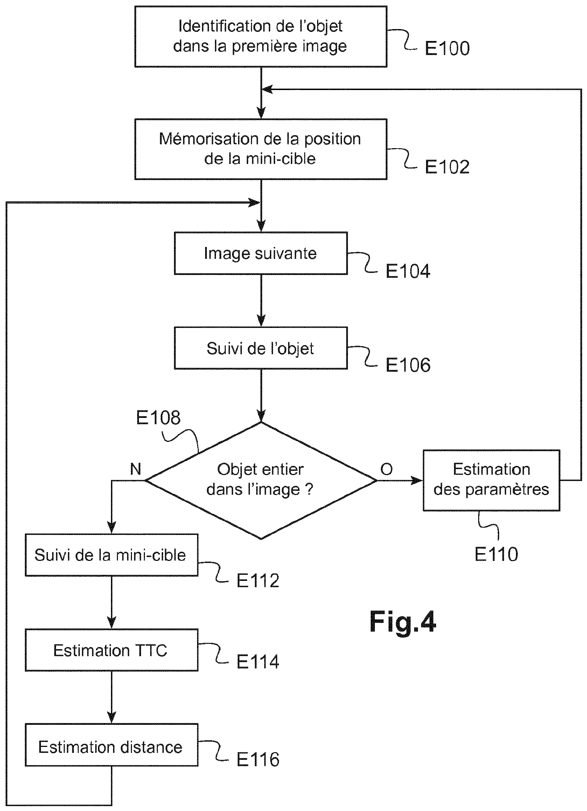

En revanche, dans la troisième image 24 et dans la quatrième image 26, l'objet (ici l'autre véhicule 4) déborde de l'image et l'application d'un procédé conforme aux enseignements de l'invention, tel que décrit ci-après en référence à la figure 4, est donc nécessaire pour déterminer son éloignement.

La figure 4 représente les étapes principales de procédé mis en œuvre par le système de la figure 2. Un tel procédé est par exemple mis en œuvre par le processeur 10 du fait de l'exécution d'un programme d'ordinateur (mémorisé par exemple dans les moyens de stockage 12) par ce processeur 10.

Ce procédé débute à l'étape E100 par l'identification de l'objet (ici l'autre véhicule automobile 4) dans une première image (ici par exemple l'image 20 ou une image antérieure), par exemple au moyen d'un algorithme de reconnaissance de forme. Cette étape permet de définir une première forme géométrique (ici un premier rectangle 30) dont les bords correspondent de manière générale aux bords de l'objet 4 dans l'image concernée 20.

On peut alors définir également une seconde forme géométrique, ici un second rectangle 40, située à l'intérieur de la première forme géométrique 30 et dont les dimensions et le positionnement sont prédéterminés relativement à la première forme géométrique 30. Dans le cas du rectangle décrit ici, la longueur du second rectangle 40 s'étend sur une partie seulement de la longueur du premier rectangle 30 et la largeur du second rectangle 40 s'étend sur une partie seulement de la largeur du premier rectangle 30. On dénomme "*mini-cible*" cette seconde forme géométrique 40 du fait qu'elle est suivie dans certaines étapes du procédé décrites plus loin.

On mémorise à l'étape E102 la position de la seconde forme géométrique 40. En pratique, on mémorise par exemple les coordonnées (dans l'image courante) des points qui forment la seconde forme géométrique 40, ici les coordonnées des quatre points formant le rectangle.

On remarque que, quelle que soit l'image pour laquelle l'étape E102 est mise en œuvre, la position et la taille relatives de la mini-cible (c'est-à-dire de la seconde forme géométrique) par rapport à l'objet (représenté par la première forme géométrique) sont constantes.

On passe ensuite au moyen d'une étape E104 au traitement de l'image suivante. L'image suivante est par exemple traitée dès qu'elle est disponible dans les moyens de mémorisation 12 et l'étape E104 correspond dans ce cas à l'attente de la disponibilité de l'image suivante.

Lorsque l'image suivante est disponible, on procède à l'étape E106 au suivi de l'objet 4 dans l'image. Cette étape est par exemple mise en œuvre au moyen d'un algorithme de suivi visuel (en anglais "*visual tracking algorithm*") tel que celui décrit dans le document WO2013/092795, appliqué à l'objet 4 dans son ensemble (c'est-à-dire en utilisant la première forme géométrique identifiée dans l'image précédente). Cette étape permet d'identifier dans l'image courante le positionnement de la première forme géométrique (ici un rectangle 32, 34, 36) qui a le même contenu que la première forme géométrique identifiée dans l'image précédente.

On peut ainsi déterminer à l'étape E108 si l'objet est entièrement représenté dans l'image courante.

Si l'objet est entièrement représenté dans l'image courante, on peut déterminer à l'étape E110 la largeur $w_t$ (en pixels) de l'objet dans l'image courante et les paramètres représentatifs de l'éloignement de l'objet, par exemple notamment le temps avant collision (généralement dénommé TTC pour "*Time To Collision*") selon le procédé décrit dans la demande de brevet WO2013/092795.

Dans ce cas, le procédé boucle ensuite à l'étape E102 afin de mémoriser la position de la seconde forme géométrique (ici le rectangle 42) contenue selon des règles géométriques prédéterminées dans la première forme géométrique (ici le rectangle 32) identifiée dans l'image courante (ici la seconde image 22 de la séquence d'images représentées en figure 3), comme déjà expliqué ci-dessus, puis se poursuit à l'étape E104 pour traiter l'image suivante.

S'il est en revanche déterminé à l'étape E108 que l'objet identifié n'est pas entièrement contenu dans l'image courante, on procède à l'étape E112 à laquelle on effectue un suivi de la mini-cible définie plus haut (voir l'étape E102). On met par exemple en œuvre pour ce faire l'algorithme de suivi visuel déjà mentionné (décrit dans le document WO2013/092795), appliqué cette fois à la mini-cible 46, c'est-à-dire en utilisant la seconde forme géométrique 42 dont la position a été mémorisée lors du dernier passage à l'étape E102.

Un tel algorithme permet d'identifier, dans l'image courante 24, 26, la seconde forme géométrique 44, 46 dont le contenu est identique à la seconde forme géométrique 42 définie lors du dernier passage à l'étape E102.

Du fait qu'il existe un rapport déterminé (constant quelle que soit l'image) de dimensions entre la mini-cible (seconde forme géométrique) et l'objet (première forme géométrique), on peut estimer la position et les dimensions (notamment la largeur $w_t$ en pixels) de l'objet dans l'image courante 24, 26 à partir de la position et des dimensions de la mini-cible (seconde forme géométrique 44, 46) identifiée par l'algorithme de suivi de l'étape E112.

On peut ainsi déterminer le temps avant collision, vu de la caméra vidéo 8, noté ci-après $ttc\_cam_t$, par exemple selon la méthode décrite WO2013/092795, puisque la mise en œuvre de l'étape E112 a permis d'estimer la largeur $w_t$ de l'objet bien que celui-ci déborde de l'image 24, 26 :

$$ttc\_cam_t = (T_t - T_{t-N+1})/(S_{t-N+1,t} - 1),$$

où $T_t$ correspond à l'instant de prise de l'image courante t, $T_{t-N+1}$ correspond à l'instant de prise d'une image antérieure t-N+1 (ces deux images formant, avec les images comprises entre elle, une séquence de N images) et $S_{t-N+1,t}$ est le changement d'échelle entre ces deux images :

$$S_{t-N+1,t} = S_{t-N+1}.S_{t-N+2}. \dots .S_{t-1}.S_t \text{ avec } S_u = w_u/w_{u-1}.$$

On peut alors en déduire à l'étape E114 le temps avant collision $ttc_t$ (cette fois pour le véhicule automobile 2) en tenant compte de la distance x_cam séparant le capteur d'image (ici la caméra vidéo 8) et l'avant du véhicule 2 (ici les pare-chocs) :

$$ttc_t = ttc\_cam_t + (x\_cam / v_t),$$

la vitesse instantanée $v_t$ (négative lorsque l'objet 4 se rapproche du véhicule 2) pouvant être évaluée comme suit :

$$v_t = -(f.W)/(w_t*ttc\_cam_t),$$

où f est la distance focale du capteur d'image (ici la caméra vidéo 8) et W la largeur réelle de l'objet, la distance entre l'objet 4 et la caméra 8 étant en effet égale à $f.(W/w_t)$.

On remarque que la largeur réelle W de l'objet 4 est constante et a pu être déterminée au préalable, par exemple lors du précédent passage à l'étape E110, selon une méthode d'estimation telle que celle décrite dans la demande de brevet EP1806595.

On peut alors déterminer à l'étape E116 la distance $d_t$ séparant l'objet 4 du véhicule 2, en considérant qu'entre l'image précédente t-1 et l'image courante t la vitesse a été constante et égale à $v_t$ :

$$d_t = d_{t-1} + v_t.(T_t - T_{t-1}),$$

où $T_t$ correspond comme déjà indiqué à l'instant de prise de l'image courante t et $T_{t-1}$ correspond à l'instant de prise de l'image précédente.

Une fois ces paramètres déterminés pour l'image courante, on boucle à l'étape E104 pour procéder au traitement de l'image suivante.

Le suivi partiel de cible prévu à l'étape E112, s'il est répété (dans le cas où l'objet n'est pas entier dans l'image pour une pluralité d'images successives comme sur les images 24 et 26), peut toutefois introduire des dérives. On peut donc prévoir que le suivi partiel de cible (étape E112) et l'estimation des paramètres sur cette base (étapes E114 et E116) ne soit répétés que pendant une durée prédéterminée, par exemple comprise entre 0,5 s et 1,5 s, ici égale à 1 seconde. Au-delà de cette durée prédéterminée sans passage par une étape de suivi de l'objet dans son ensemble (étape E106), on considérera que l'objet est perdu.

En variante, cette durée pourrait être variable pour correspondre à la durée nécessaire envisagée pour le déclenchement du système d'avertissement ou de freinage ; une telle durée dépend de la vitesse relative considérée, de la distance pour laquelle la cible n'est plus entièrement contenue dans l'image prise par le capteur d'image et du temps avant collision (ou de la distance) de déclenchement du système d'avertissement ou de freinage.

Afin d'améliorer la robustesse, on peut prévoir par ailleurs que l'algorithme de suivi partiel (étape E112) ne soit mis en œuvre que dans certaines conditions particulières, par exemple lorsque la distance $d_{t-1}$ à l'objet (telle que déterminée au dernier passage à l'étape E110) est inférieure à un premier seuil prédéterminé (par exemple compris entre 5 m et 15 m) et/ou lorsque la vitesse relative $v_{t-1}$ (telle que déterminée au dernier passage à l'étape E110) est inférieure à un second seuil prédéterminé (par exemple compris entre 5 km/h et 20 km/h). Lorsque ces conditions ne sont pas remplies et qu'il est déterminé à l'étape E108 que l'objet n'est pas entier dans l'image, on considère l'objet perdu plutôt (au lieu de poursuivre le procédé à l'étape E112).

Enfin, les paramètres estimés aux étapes E114 et E116 peuvent éventuellement être introduits comme entrées d'un filtre de Kalman afin d'être affinés. Les valeurs affinées peuvent ainsi être utilisées dans la suite du traitement (en particulier lors de l'estimation suivante des paramètres au prochain passage aux étapes E114 et E116).

## Revendications

1. Procédé d'estimation d'un paramètre représentatif de l'éloignement d'un objet (4) au moyen d'un capteur d'image (8) équipant un véhicule automobile (2), comprenant une étape de détermination (E110) d'une première valeur du paramètre sur la base d'une dimension de l'objet (4) dans au moins une première image (20 ; 22) prise par le capteur d'image (8) et dans laquelle l'objet (4) est entièrement contenu ;
   **caractérisé en ce que**, s'il est déterminé à une étape (E108) que l'objet (4) n'est pas entièrement contenu dans une image courante ; ledit procédé comprend en outre les étapes suivantes :

   - détermination (E112) d'une dimension d'une partie (44 ; 46) seulement de l'Objet (4) dans l'image courante (24 ; 26) prise par le capteur d'image (8) et dans laquelle l'objet (4) est contenu seulement en partie ;
   - détermination (E114 ; E116) d'une seconde valeur du paramètre sur la base de la dimension de ladite partie (44 ; 46).

2. Procédé de détermination selon la revendication 1, comprenant les étapes suivantes :

   - détermination d'une première forme géométrique (30 ; 32) correspondant à l'objet (4) dans la première image (20 ; 22) ;
   - localisation, dans la première image (20 ; 22), d'une seconde forme géométrique (40 ; 42) située à l'intérieur de la première forme géométrique (30 ; 32) ;
   - détermination de ladite partie (44 ; 46) de l'objet (4) dans l'image courante (24 ; 26) au moyen d'un algorithme de suivi visuel appliqué au contenu de la seconde forme géométrique (40 ; 42) dans la première image (20 ; 22).

3. Procédé de détermination selon la revendication 2, dans lequel la première forme géométrique (30 ; 32) dans la première image (20 ; 22) est déterminée au moyen d'un algorithme de suivi visuel appliqué à l'objet (4) identifié dans une image antérieure.

4. Procédé de détermination selon la revendication 3, dans lequel l'objet (4) est identifié dans l'image antérieure au moyen d'un algorithme de reconnaissance de forme (E100).

5. Procédé de détermination selon l'une des revendications 2 à 4, dans lequel la seconde forme géométrique (40 ; 42) a une position et des dimensions prédéterminées relativement à la première forme géométrique (30 ; 32).

6. Procédé de détermination selon l'une des revendications 2 à 5, dans lequel la première forme géométrique (30 ; 32) et la seconde forme géométrique (40 ; 42) sont des rectangles.

7. Procédé de détermination selon l'une des revendications 1 à 6, dans lequel le paramètre est un temps avant collision de l'objet (4).

8. Procédé de détermination selon l'une des revendications 1 à 6, dans lequel le paramètre est une distance entre le véhicule automobile (2) et l'objet (4).

9. Système d'estimation d'un paramètre représentatif de l'éloignement d'un objet (4) au moyen d'un capteur d'image (8) équipant un véhicule automobile (2), comprenant des moyens de détermination d'une première valeur du paramètre sur la base d'une dimension de l'objet (4) dans au moins une première image (20 ; 22) prise par le capteur d'image (8) et dans laquelle l'objet (4) est entièrement contenu ; **caractérisé en ce que** ledit système comprend en outre :

   - des moyens pour déterminer si l'objet (4) n'est pas entièrement contenu dans une image courante ;
   - des moyens de détermination d'une dimension d'une partie (44 ; 46) seulement de l'objet dans l'image courante (24 ; 26) prise par le capteur d'image (8) et dans laquelle l'objet (4) est contenu seulement en partie ;
   - des moyens de détermination d'une seconde valeur du paramètre sur la base de la dimension de ladite partie (44 ; 46).

10. Véhicule automobile comprenant un système d'estimation selon la revendication 9 et un système d'avertissement anti-collision conçu pour utiliser les première et seconde valeurs du paramètre.

11. Véhicule automobile comprenant un système d'estimation selon la revendication 9 et un système de freinage conçu pour utiliser les première et seconde valeurs du paramètre.

12. Un programme d'ordinateur, comprenant des moyens de code de programme pour mettre en œuvre le procédé de l'une quelconque des revendications 1 à 8, lorsque ledit programme fonctionne sur un ordinateur.

13. Un produit de programme d'ordinateur, comprenant des moyens de code de programme, stocké sur un milieu lisible par un ordinateur, pour mettre en œuvre le procédé selon l'une quelconque des revendications 1 à 8, lorsque ledit produit de programme fonctionne sur un ordinateur.

**Patentansprüche**

1. Verfahren zum Schätzen eines für die Entfernung eines Objekts (4) repräsentativen Parameters mittels eines zur Ausstattung eines Kraftfahrzeugs (2) gehörenden Bildsensors (8), das einen Schritt der Bestimmung (E110) eines ersten Werts des Parameters auf der Basis einer Abmessung des Objekts (4) in mindestens einem vom Bildsensor (8) aufgenommenen ersten Bild (20; 22) enthält, in dem das Objekt (4) vollständig enthalten ist; **dadurch gekennzeichnet, dass** dass, wenn in einem Schritt (E108) festgestellt wird, dass das Objekt (4) nicht vollständig in einem aktuellen Bild enthalten ist, das Verfahren außerdem die folgenden Schritte enthält:

   - Bestimmung (E112) einer Abmessung nur eines Teils (44; 46) des Objekts (4) im aktuellen Bild (24; 26), das vom Bildsensor (8) aufgenommen wurde und in dem das Objekt (4) nur zum Teil enthalten ist;
   - Bestimmung (E114; E116) eines zweiten Werts des Parameters auf der Basis der Abmessung des Teils (44; 46) .

2. Bestimmungsverfahren nach Anspruch 1, das die folgenden Schritte enthält:

   - Bestimmung einer ersten geometrischen Form (30; 32) entsprechend dem Objekt (4) im ersten Bild (20; 22);
   - Lokalisierung im ersten Bild (20; 22) einer zweiten geometrischen Form (40; 42), die sich innerhalb der ersten geometrischen Form (30; 32) befindet;
   - Bestimmung des Teils (44; 46) des Objekts (4) im aktuellen Bild (24; 26) mittels eines visuellen Nachführungsalgorithmus, der an den Inhalt der zweiten geometrischen Form (40; 42) im ersten Bild (20; 22) angewendet wird.

3. Bestimmungsverfahren nach Anspruch 2, wobei die erste geometrische Form (30; 32) im ersten Bild (20; 22) mittels eines visuellen Nachführungsalgorithmus bestimmt wird, der an das in einem vorhergehenden Bild erkannte Objekt (4) angewendet wird.

4. Bestimmungsverfahren nach Anspruch 3, wobei das Objekt (4) im vorhergehenden Bild mittels eines Formerkennungsalgorithmus (E100) erkannt wird.

5. Bestimmungsverfahren nach einem der Ansprüche 2 bis 4, wobei die zweite geometrische Form (40; 42) eine vorbestimmte Position und vorbestimmte Abmessungen bezüglich der ersten geometrischen Form (30; 32) hat.

6. Bestimmungsverfahren nach einem der Ansprüche 2 bis 5, wobei die erste geometrische Form (30; 32) und die zweite geometrische Form (40; 42) Rechtecke sind.

7. Bestimmungsverfahren nach einem der Ansprüche 1 bis 6, wobei der Parameter eine Zeit vor der Kollision des Objekts (4) ist.

8. Bestimmungsverfahren nach einem der Ansprüche 1 bis 6, wobei der Parameter ein Abstand zwischen dem Kraftfahrzeug (2) und dem Objekt (4) ist.

9. System zum Schätzen eines für die Entfernung eines Objekts (4) repräsentativen Parameters mittels eines zur Ausrüstung eines Kraftfahrzeugs (2) gehörenden Bildsensors (8), das Einrichtungen zur Bestimmung eines ersten Werts des Parameters auf der Basis einer Abmessung des Objekts (4) in mindestens einem ersten Bild (20; 22) enthält, das vom Bildsensor (8) aufgenommen wurde und in dem das Objekt (4) vollständig enthalten ist; **dadurch gekennzeichnet, dass** das System außerdem enthält:

   - Einrichtungen zur Bestimmung, ob das Objekt (4) nicht vollständig in einem aktuellen Bild enthalten ist;
   - Einrichtungen zur Bestimmung einer Abmessung nur eines Teils (44; 46) des Objekts im aktuellen Bild (24; 26), das vom Bildsensor (8) aufgenommen wurde und in dem das Objekt (4) nur zum Teil enthalten ist;
   - Einrichtungen zur Bestimmung eines zweiten Werts des Parameters auf der Basis der Abmessung des Teils (44; 46) .

10. Kraftfahrzeug, das ein Schätzsystem nach Anspruch 9 und ein Kollisionswarnsystem enthält, das konzipiert ist, den ersten und den zweiten Wert des Parameters zu verwenden.

11. Kraftfahrzeug, das ein Schätzsystem nach Anspruch 9 und ein Bremssystem enthält, das konzipiert ist, den ersten und den zweiten Wert des Parameters zu verwenden.

12. Computerprogramm, das Programmecodeeinrichtungen enthält, um das Verfahren nach einem der Ansprüche 1 bis 8 durchzuführen, wenn das Programm auf einem Computer ausgeführt wird.

13. Programmcodeeinrichtungen enthaltendes Computerprogrammprodukt, das auf einem computerlesbaren Medium gespeichert ist, um das Verfahren nach einem der Ansprüche 1 bis 8 durchzuführen, wenn das Programmprodukt auf einem Computer ausgeführt wird.

**Claims**

1. Method for estimating a parameter representative of a distance from an object (4) by means of an image sensor (8) with which a motor vehicle (2) is equipped, comprising a step (E110) of determination of a first value of the parameter on the basis of a dimension of the object (4) in at least one first image (20; 22) taken by the image sensor (8) and in which the object (4) is entirely contained; **characterized in that**, if it is determined in a step (E108) that the object (4) is not entirely contained in a current image; said method further comprises the following steps:

   - determination (E112) of a dimension of only a part (44; 46) of the object (4) in the current image (24; 26) taken by the image sensor (8) and in which the object (4) is only partly contained;
   - determination (E114; E116) of a second value of the parameter on the basis of the dimension of said part (44; 46) .

2. Determination method according to Claim 1, comprising the following steps:

   - determination of a first geometrical shape (30; 32) corresponding to the object (4) in the first image (20; 22) ;
   - location, in the first image (20; 22), of a second geometrical shape (40; 42) situated inside the first geometrical shape (30; 32);
   - determination of said part (44; 46) of the object (4) in the current image (24; 26) by means of a visual tracking algorithm applied to the content of second geometrical shape (40; 42) in the first image (20; 22).

3. Determination method according to Claim 2, wherein the first geometrical shape (30; 32) in the first image (20; 22) is determined by means of a visual tracking algorithm applied to the object (4) identified in a prior image.

4. Determination method according to Claim 3, wherein the object (4) is identified in the prior image by means of a shape recognition algorithm (E100).

5. Determination method according to one of Claims 2 to 4, wherein the second geometrical shape (40; 42) has a position and dimensions that are predetermined relative to the first geometrical shape (30; 32).

6. Determination method according to one of Claims 2 to 5, wherein the first geometrical shape (30; 32) and the second geometrical shape (40; 42) are rectangles.

7. Determination method according to one of Claims 1 to 6, wherein the parameter is a time before collision with the object (4).

8. Determination method according to one of Claims 1 to 6, wherein the parameter is a distance between the motor vehicle (2) and the object (4).

9. System for estimating a parameter representative of the distance from an object (4) by means of an image sensor (8) with which a motor vehicle (2) is equipped, comprising means for determining a first value of the parameter on the basis of a dimension of the object (4) in at least one first image (20; 22) taken by the image sensor (8) and in which the object (4) is entirely contained; **characterized in that** said system further comprises:

   - means for determining whether the object (4) is not entirely contained in a current image;
   - means for determining a dimension of only a part (44; 46) of the object in the current image (24; 26) taken by the image sensor (8) and in which the object (4) is only partly contained;
   - means for determining a second value of the parameter on the basis of the dimension of said part (44; 46).

10. Motor vehicle comprising an estimation system according to Claim 9 and an anti-collision warning system designed to use the first and second values of the parameter.

11. Motor vehicle comprising an estimation system according to Claim 9 and a braking system designed to use the first and second values of the parameter.

12. Computer program, comprising program code means for implementing the method of any one of Claims 1 to 8, when said program runs on a computer.

13. Computer program product, comprising program code means, stored on a computer-readable medium, for implementing the method according to any one of Claims 1 to 8, when said program product runs on a computer.

# Fig.1

4

8

2

x_cam

# Fig.2

8

6

10

12

14

# Fig.3

20    22    24    26

4     4     4     4

40    42    44    46

30    32    34    36

Identification de l'objet
dans la première image — E100

Mémorisation de la position
de la mini-cible — E102

Image suivante — E104

Suivi de l'objet — E106

E108

N ← Objet entier dans l'image ? → O → Estimation des paramètres — E110

Suivi de la mini-cible — E112

Estimation TTC — E114

Estimation distance — E116

**Fig.4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070035285 A
- WO 2005098782 A
- WO 2013092795 A
- EP 1806595 A